# EUROPÄISCHE PATENTSCHRIFT

(11) **EP 4 285 065 B1**
(45) Veröffentlichungstag und Bekanntmachung des Hinweises auf die Patenterteilung: **25.02.2026**
(21) Anmeldenummer: 22702861.0
(22) Anmeldetag: 26.01.2022
(51) Int. Cl.: F28F 9/013, F28D 1/04, F28D 20/00

(54) **WÄRMESPEICHER**
HEAT RESERVOIR
RÉSERVOIR THERMIQUE

(30) Priorität: 26.01.2021 DE 102021101635
(43) Veröffentlichungstag der Anmeldung: 06.12.2023
(73) Patentinhaber: AZ Vermögensverwaltung GmbH & Co. KG, 61276 Weilrod (DE)
(72) Erfinder: ZIMMERMANN, Dirk, 09526 Olbernhau (DE)
(74) Vertreter: Launhardt, Thomas
(86) Internationale Anmeldenummer: PCT/DE2022/100069
(87) Internationale Veröffentlichungsnummer: WO 2022/161582

(56) Entgegenhaltungen:
- EP-A1- 1 835 214
- EP-A1- 2 080 977
- WO-A1-2016/020893
- CN-U- 205 561 271
- DE-A1- 102015 100 227

## Beschreibung

Die vorliegende Offenbarung umfasst einen Wärmespeicher, beispielsweise zur Heizungsunterstützung und/oder Brauchwassererwärmung, mit einem Behälter und einem darin angeordneten Wärmetauscher.

Wärmetauscher dienen dazu, thermische Energie von einem Medium auf ein anderes Medium zu übertragen. Wärmetauscher kommen beispielsweise in der Heiz-, Lüftungs- und/oder Klimatechnik zum Einsatz. Ein Wärmetauscher umfasst üblicherweise eine von einem Wärmeträgermedium durchströmbare Rohrleitung, welche beispielsweise wendelförmig um eine Achse verläuft. Ein solcher Wärmetauscher kann ein Bestandteil eines Wärmespeichers sein, welcher beispielsweise zur Heizungsunterstützung und/oder Brauchwassererwärmung eingesetzt wird.

Der Wärmetauscher ist üblicherweise im Inneren des Wärmespeichers angeordnet und dient dazu, einen Wärmeaustausch zwischen dem durch die Rohrleitung strömenden Wärmeträgermedium und einem im Inneren des Wärmespeichers vorgehaltenen Wärmespeichermedium zu bewirken. Die Rohrleitung des Wärmetauschers ist häufig an einem Traggestell angebracht, welches beispielsweise im Inneren des Wärmespeichers aufgestellt ist und die Rohrleitung in einer gewünschten Lage hält.

Ein gattungsgemäßer Wärmespeicher ist aus der DE 10 2015 100 227 A1 bekannt. Weitere Wärmespeicher sind aus der CN 205 561 271 U, der EP 1 835 214 A1 und der WO 2016/020893 A1 bekannt.

Es ist eine Aufgabe, bei einem Wärmespeicher der vorstehend beschriebenen Art ein Konzept für ein Traggestell vorzuschlagen, welches als Träger einer Rohrleitung eines Wärmetauschers des Wärmespeichers geeignet ist.

Die Aufgabe wird mit einem Wärmespeicher gelöst, welcher die Merkmale des Anspruchs 1 aufweist.

Vorteilhafte Ausführungsformen und/oder Ausgestaltungen und/oder Aspekte der Erfindung ergeben sich aus den Unteransprüchen, der nachfolgenden Beschreibung und den Figuren.

Es wird ein Wärmespeicher vorgeschlagen, welcher beispielsweise zur Heizungsunterstützung und/oder Brauchwassererwärmung geeignet ist oder dient. Der Wärmespeicher umfasst einen Behälter, welcher eingerichtet ist, in seinem Innenraum ein flüssiges Wärmespeichermedium aufzunehmen. Der Wärmespeicher umfasst ferner einen in dem Innenraum des Behälters angeordneten Wärmetauscher.

Der Wärmetauscher umfasst ein Traggestell und eine daran angebrachte Rohrleitung, welche von einem Wärmeträgermedium durchströmbar ist. Bei dem Wärmeträgermedium kann es sich um eine Flüssigkeit, insbesondere eine wässrige Flüssigkeit oder Wasser, handeln. Beispielsweise ist der Wärmetauscher über das Traggestell in dem Innenraum des Behälters aufgestellt. Beispielsweise ist das Traggestell mitsamt der daran angeordneten Rohrleitung des Wärmetauschers aus dem Innenraum herauszunehmen.

Bezüglich des Wärmespeichers und/oder des Behälters wird zum Zwecke der Vervollständigung und Ergänzung der vorliegenden Offenbarung auf die deutsche Patentanmeldung mit dem amtlichen Aktenzeichen DE 10 2021 101 633.9 mit dem Hinweis Bezug genommen, dass diese Anmeldung etwaigen gleichlautenden Begriffen eventuell eine Bedeutung beilegt, die von der Bedeutung in der vorliegenden Offenbarung abweicht.

Das Traggestell umfasst mehrere längliche Halteelemente. Die Halteelemente erstrecken sich mit ihrer Längserstreckung in Richtung einer Raumachse, insbesondere einer gemeinsamen Raumachse. Beispielsweise sind die Halteelemente bezüglich ihrer Längserstreckung parallel oder im Wesentlichen parallel zueinander angeordnet.

Die Halteelemente weisen mehrere oder eine Vielzahl von Anbindungsstellen für die Rohrleitung auf. Dadurch ist die Rohrleitung in einer gewünschten Position zu halten. Auch kann dadurch der Verlauf der Rohrleitung in einer gewünschten Form gehalten werden, insbesondere sofern die Rohrleitung flexibel ist, beispielsweise ein Wellrohr ist.

Die Anbindungsstellen, insbesondere die Anbindungsstellen wenigstens eines der Halteelemente oder die Anbindungsstellen eines jeweiligen Halteelements, sind in Richtung der Längserstreckung der Halteelemente gesehen, hintereinanderliegend angeordnet. Beispielsweise sind die Anbindungsstellen eines der Halteelemente gegenüber den Anbindungsstellen eines anderen der Halteelemente in Richtung ihrer Längserstreckung bzw. in Richtung der Raumachse versetzt zueinander angeordnet. Dadurch ist die Rohrleitung zumindest über einen Längenabschnitt in eine sich um die Raumachse verlaufende und in Richtung der Raumachse erstreckende Helixform, also zylindrische Spiralform, zu bringen und/oder in einer solchen Form zu halten.

Erfindungsgemäß ist vorgesehen, dass wenigstens eines der Halteelemente ein Holzmaterial aufweist oder daraus besteht. Es hat sich gezeigt, dass Holz als Material für das wenigstens eine Halteelement das Erreichen einer gewünschten hohen Steifigkeit und/oder Festigkeit des Traggestells begünstigt. Darüber hinaus hat sich gezeigt, dass durch den Einsatz des Holzes das Traggestell gewichtsmäßig relativ leicht gebaut werden kann. Dies ist beispielsweise darauf zurückzuführen, dass Holz ein günstiges Verhältnis von Festigkeit und Gewicht aufweist.

Weiterhin hat sich gezeigt, dass durch Holz als Material für das Traggestell eine Dämpfung von auftretenden mechanischen Schwingungen begünstigt ist. Derartige Schwingungen können durch die an dem Traggestell angebundene Rohrleitung bewirkt sein, und beispielsweise aus einem stoßartigen Durchströmen des Wärmeträgermediums durch die Rohrleitung resultieren. Häufig machen sich diese Schwingungen durch ein Vibrieren der Rohrleitung bemerkbar. Es konnte beobachtet werden, dass die günstige Dämpfungseigenschaft des Holzes, welche beispielsweise durch seine Faserstruktur bewirkt ist, sich positiv auf das Dämpfungsverhalten des Traggestells auswirkt und den Schwingungen der Rohrleitung entgegenwirkt.

Das Holzmaterial kann Hartholz, wie beispielsweise Laubholz, oder Weichholz, wie beispielsweise Nadelholz, aufweisen oder daraus bestehen. Beispielsweise weist das Holzmaterial ein Eichenholz oder ein Akazienholz oder ein Robinienholz oder ein Kastanienholz oder ein Pappelholz auf oder besteht daraus.

Bei einer Ausführungsform weist das Holzmaterial ein Pappelholz auf oder besteht daraus. Es hat sich gezeigt, dass das Pappelholz günstige Eigenschaften aufweist, um als ein Bestandteil für das Traggestell genutzt zu werden bzw. daraus das Traggestell zu bilden. Dies ist beispielsweise darauf zurückzuführen, dass das Pappelholz, insbesondere in Querrichtung, ein relativ geringes Quellmaß und/oder Schwindmaß aufweist. Darüber hinaus hat das Pappelholz eine relativ geringe Rohdichte, so dass ein daraus gebildetes Traggestell gewichtsmäßig relativ leicht ist. Ein weiterer positiver Aspekt ist die geringe Astigkeit des Pappelholzes, welche eine hohe Stabilität des Traggestells begünstigt.

Bei einer ermöglichen Ausführungsform ist das Holzmaterial ein Vollholz bzw. weist das Holzmaterial ein Vollholz auf oder besteht daraus. Unter dem Begriff "Vollholz" oder "Massivholz" ist in der vorliegenden Offenbarung insbesondere ein Holz zu verstehen, dessen Querschnitt aus einem Baumstamm herausgearbeitet und gegebenenfalls spanabhebend bearbeitet ist. Eine weitergehende Bearbeitung ist bevorzugt noch nicht vorgenommen. Dadurch ist bei dem Vollholz das ursprüngliche Gefüge des Holzstamms noch unverändert oder weitgehend unverändert, es wurde also nicht oder im Wesentlichen nicht mechanisch oder mechanisch-chemisch verändert. Indem das Holzmaterial ein Vollholz ist, ist daher eine Fertigung des Traggestells, insbesondere des wenigstens einen Halteelements, in technisch einfacher Weise und/oder zu geringen Kosten begünstigt, wobei die vorstehend beschriebenen positiven Eigenschaften von Holz im Hinblick auf das Traggestell gegeben sind.

Ergänzend oder alternativ kann das Holzmaterial ein Brettschichtholz oder ein Holzwerkstoff aufweisen oder daraus bestehen. Unter dem Begriff "Brettschichtholz" ist in der vorliegenden Offenbarung insbesondere ein Holzmaterial zu verstehen, welches wenigstens zwei oder drei Lagen von Holzbrettern umfasst, die vorzugsweise mit jeweils gleicher Faserrichtung aneinander liegen und gegeneinander verklebt sind. Insbesondere sind jeweils benachbarte Holzbretter gegeneinander verklebt. Unter dem Verkleben ist ein Verbinden mittels eines Klebstoffs, wie beispielsweise eines Holzleims und/oder eines Schmelzklebstoffes, insbesondere eines wasserfesten Klebstoffs, zu verstehen.

Unter dem Begriff "Holzwerkstoff" ist in der vorliegenden Offenbarung insbesondere ein Holzmaterial zu verstehen, welches durch ein Zerkleinern von Holz, wie beispielsweise Vollholz, und anschließendem Zusammenfügen der daraus gewonnenen Holzpartikel gebildet wird. Die Holzpartikel können ohne oder mit Bindemitteln oder mechanischen Verbindungen miteinander verbunden sein. Unter dem Begriff "Holzwerkstoff" sind insbesondere Holzspanwerkstoffe, wie beispielsweise Holzpresswerkstoffe bzw. Holzpressplatten, oder Holzfaserwerkstoffe, wie beispielsweise Holzfaserplatten, oder Verbundwerkstoffe, wie beispielsweise Holz-Polymer-Werkstoffe (WPC, Wood-Plastic-Composite), umfasst.

Insbesondere ist es vorgesehen, dass das Holzmaterial eine Faserrichtung aufweist, welche sich in Richtung der Längserstreckung des wenigstens einen Halteelements erstreckt. Dadurch ist das Erreichen der gewünschten hohen Steifigkeit und/oder Festigkeit des Traggestells begünstigt. Unter dem Begriff "Faserrichtung" ist in der vorliegenden Offenbarung insbesondere die Richtung des Faserverlaufes im Holz zu verstehen. Die Faserrichtung verläuft vorzugsweise in axialer Richtung, also parallel oder im Wesentlichen parallel zur Stammachse des Holzes.

Bei einer weiteren Ausführungsform ist wenigstens eine der Anbindungsstellen des wenigstens einen Halteelements an dem wenigstens einen Halteelement ausgebildet, insbesondere ausgeformt bzw. angeformt. Dadurch ist eine technisch einfache Herstellung der wenigstens einen Anbindungsstelle begünstigt, da dazu das wenigstens eine Halteelement direkt genutzt wird. Separate Funktionsteile zur Ausbildung der wenigstens einen Anbindungsstelle können eingespart werden.

Indem die wenigstens eine Anbindungsstelle an dem wenigstens einen Halteelement ausgebildet ist, ist es ermöglicht, dass die Anbindung der Rohrleitung an dem Holzmaterial des wenigstens einen Halteelements stattfindet. Insofern kann auf diese Weise die Rohrleitung mit dem Holzmaterial des wenigstens einen Halteelements in Kontakt treten. Sofern die Rohrleitung beispielsweise aus Edelstahl besteht oder Edelstahl aufweist und im Bereich des Traggestells beispielsweise Bauteile aus Stahl verbaut sind, ist auf diese Weise einer möglichen Korrosion entgegengewirkt, da das Holzmaterial als Isolator wirkt.

Eine mögliche Ausführungsform besteht darin, dass die wenigstens eine Anbindungsstelle und/oder wenigstens eine der Anbindungsstellen des wenigstens einen Halteelements ein in dem Holzmaterial vorliegendes Loch aufweist oder daraus gebildet ist, beispielsweise um daran die Rohrleitung anzubinden, insbesondere direkt und/oder unmittelbar anzubinden oder über ein Befestigungselement anzubinden. Dadurch ist eine technisch einfache Herstellung der wenigstens einen Anbindungsstelle an dem wenigstens einen Halteelement begünstigt, da dazu lediglich das Loch bereitzustellen ist. Durch das Loch ist ferner eine technisch einfache Montage der Rohrleitung an dem wenigstens einen Halteelement begünstigt. Insbesondere ist das Loch durch Materialausnehmung gebildet. Beispielsweise handelt es sich bei dem Loch um eine Bohrung.

Bei dem Befestigungselement kann es sich um ein separates Befestigungselement handeln. Beispielsweise ist das Befestigungselement eingerichtet, die Rohrleitung zu halten und/oder daran die Rohrleitung zu befestigen, wobei das Befestigungselement selbst wiederum beispielsweise an dem Loch angebunden ist.

Bevorzugt ist das Holzmaterial getrocknet und weist eine vorgegebene Feuchtigkeit auf oder unterschreitet eine vorgegebene Feuchtigkeit, beispielsweise wenn die Rohrleitung an dem Traggestell montiert wird. Bei einer möglichen Ausführungsform weist das Loch eine lichte Weite auf, welche bemessen ist, um in dem Loch die Rohrleitung oder das Befestigungselement für die Rohrleitung aufzunehmen, insbesondere mit Spiel aufzunehmen, und bei einem Quellen des Holzmaterials eine dadurch bedingte Klemmkraft auf die Rohrleitung zu bewirken. Insbesondere ist durch das Quellen die Rohrleitung oder das Befestigungselement in dem Loch kraftschlüssig bzw. klemmend gehalten, also gegen ein Herausbewegen aus dem Loch kraftschlüssig bzw. klemmend gesichert. Dadurch ist in technisch einfacher Weise eine Befestigung der Rohrleitung an dem wenigstens einen Halteelement zu realisieren, da dazu die Eigenschaft der Quellung von Holz genutzt wird.

Unter dem Begriff "Quellen" oder "Quellung" ist in der vorliegenden Offenbarung insbesondere die Eigenschaft von Holz zu verstehen, Flüssigkeit aufnehmen zu können, wodurch es zu einer Vergrößerung des Volumens des Holzes kommt. In entsprechender Weise findet eine Schwindung des Holzes statt, wenn das Holz trocknet bzw. getrocknet wird. Unter dem Begriff "Schwindung" ist in der vorliegenden Offenbarung insbesondere die Eigenschaft des Holzes zu verstehen, sein Volumen zu verkleinern, wenn das Holz Flüssigkeit verliert, also trocknet bzw. getrocknet wird.

Bei einer weiteren Ausführungsform ist es vorgesehen, dass das Loch sich in Richtung einer Achse vertieft, wobei die Achse quer zur Raumachse verläuft. Die Achse kann daher auch als Lochachse bezeichnet werden. Insbesondere ist es vorgesehen, dass das Loch ein Durchgangsloch ist. Insbesondere ist es ferner vorgesehen, dass das Durchgangsloch einen tangential und/oder quer bezüglich der Raumachse verlaufenden Durchgang durch das wenigstens eine Halteelement aufweist, beispielsweise um darin die Rohrleitung aufzunehmen. Dadurch ist es ermöglicht, die Rohrleitung an dem Traggestell in der Weise anzuordnen, dass die vorstehend beschriebene Helixform vorliegt. Grundsätzlich kann das Loch auch ein Sackloch sein.

Bei einer weiteren Ausführungsform ist es vorgesehen, dass das Loch bzw. das Durchgangsloch an einer radial und/oder quer bezüglich der Raumachse nach außen oder nach innen gewandten Seite offen ausgebildet ist, insbesondere eine Einführöffnung dort aufweist, beispielsweise um darüber die Rohrleitung längsseitig durch eine Bewegung in radialer Richtung bzw. quer bezüglich der Raumachse in das Durchgangsloch einzubringen. Dadurch ist eine Montage der Rohrleitung an dem Traggestell erleichtert, da die Rohrleitung durch seitliches Einschieben über die Einführöffnung in das Loch bzw. das Durchgangsloch eingebracht werden kann und somit ein aufwändiges Einfädeln in das Loch bzw. Durchgangsloch in axialer Richtung, also in Richtung der Lochachse, umgegangen werden kann.

Es kann ferner vorgesehen sein, dass dem wenigstens einen Halteelement ein vorzugsweise separates Sicherungselement zugeordnet ist, welches die Einführöffnung zumindest teilweise verschließt, beispielsweise um die Rohrleitung gegen ein Herausbewegen über die Einführöffnung zu sichern. Beispielsweise ist das Sicherungselement länglich ausgebildet. Das Sicherungselement kann leistenförmig oder stabförmig sein. Beispielsweise weist das Sicherungselement einen in Richtung seiner Längserstreckung gleichförmig verlaufenden Querschnitt auf. Beispielsweise handelt es sich bei dem Sicherungselement um eine Holzleiste.

Insbesondere weist das Sicherungselement ein Holzmaterial oder das vorstehend beschriebene Holzmaterial auf oder besteht daraus. Grundsätzlich kann das Sicherungselement auch ein Kunststoffbauteil sein. Unter dem Begriff "Kunststoffbauteil" ist in der vorliegenden Offenbarung ein Bauteil zu verstehen, welches ein Kunststoffmaterial aufweist oder daraus besteht. Alternativ kann das Sicherungselement auch ein Metallbauteil sein. Unter dem Begriff "Metallbauteil" ist in der vorliegenden Offenbarung ein Bauteil zu verstehen, welches einen Metallwerkstoff aufweist oder daraus besteht.

Bei einer möglichen Ausführungsform ist das Sicherungselement an dem wenigstens einen Halteelement angeordnet, insbesondere lösbar angeordnet. Insbesondere ist an dem wenigstens einen Halteelement eine Einsteckaufnahme angeordnet, insbesondere ausgeformt, in welche das Sicherungselement unter Abdeckung der Einführöffnung eingeführt ist. Dadurch ist das Sicherungselement in seine Sicherungsposition bezüglich des Lochs bzw. Durchgangslochs in einfacher Weise zu bringen.

Beispielsweise ist die Einsteckaufnahme durch eine sich quer zur Achse und in Richtung der Raumachse vertiefende Vertiefung in dem wenigstens einen Halteelement, insbesondere dem Holzmaterial des wenigstens einen Halteelements, gebildet. Dadurch ist ein seitliches Einschieben des Sicherungselements, insbesondere ein Einschieben des Sicherungselements über dessen Längsachse ermöglicht.

Beispielsweise ist die Einsteckaufnahme als Aufnahme einer Schwalbenschwanzverbindung ausgebildet und das Sicherungsteil oder ein Steckabschnitt des Sicherungsteils bildet zusammen mit der Aufnahme eine Schwalbenschwanzverbindung aus. Insbesondere ist aufgrund der Schwalbenschwanzverbindung das Sicherungsteil in der Einsteckaufnahme gegen ein Herausbewegen quer zur Achse und in Richtung der Einführöffnung formschlüssig gehalten.

Alternativ kann die Einsteckaufnahme durch eine sich quer zur Achse und quer zur Raumachse vertiefende Vertiefung in dem wenigstens einen Halteelement, insbesondere dem Holzmaterial des wenigstens einen Halteelements, gebildet sein.

Bei einer weiteren oder anderen Ausführungsform ist das wenigstens eine Halteelement wenigstens zweiteilig ausgebildet und umfasst wenigstens zwei Einzelteile, welche eingerichtet sind, miteinander verbunden zu werden. Insbesondere ist an den Einzelteilen vorzugsweise jeweils ein Umfangsabschnitt des Lochs ausgeformt. Insbesondere ist es vorgesehen, dass der jeweilige Umfangsabschnitt den Außenumfang der Rohrleitung umgreift, insbesondere teilweise umgreift.

Durch die zweiteilige Ausführung des Halteelements ist eine einfache Montage der Rohrleitung an dem wenigstens einen Halteelement ermöglicht, beispielsweise indem die Rohrleitung an den Umfangsabschnitt des Lochs des einen Einzelteils eingelegt wird und anschließend an dem einen Einzelteil das andere Einzelteil montiert wird, wobei die Umfangsabschnitte der Einzelteile den Innenumfang des Lochs ausbilden und darin dann die Rohrleitung vorliegt.

Die Einzelteile können durch Befestigungselemente, insbesondere separate Befestigungselemente, gegeneinander befestigt sein. Beispielsweise handelt es sich bei den Befestigungselementen um Schraubelemente oder Nägel oder dergleichen. Ergänzend oder alternativ können die Einzelteile durch Kleben miteinander verbunden sein.

Grundsätzlich kann es auch vorgesehen sein, dass an einem der Einzelteile eine Einsteckaufnahme und an dem anderen Einzelteil ein in die Einsteckaufnahme einsteckbarer Steckabschnitt ausgeformt sind. Beispielsweise sind die Einsteckaufnahme und der Steckabschnitt eingerichtet, eine Schwalbenschwanzverbindung oder Feder-Nut-Verbindung auszubilden, beispielsweise um die Einzelteile unter Ausbildung des Lochs bzw. Durchgangslochs miteinander zu verbinden. Beispielsweise weisen die Einzelteile jeweils einen Umfangsabschnitt des Lochs bzw. Durchgangslochs auf.

Bei einer weiteren Ausführungsform umfasst das Traggestell eine Aufstellfläche zum Aufstellen auf einem Untergrund. Insbesondere ist die Aufstellfläche einem längsseitigen Ende oder Endbereich der Halteelemente zugeordnet. Insbesondere erstrecken sich die Halteelemente mit ihrer Längserstreckung in vertikaler Richtung und/oder die Raumachse ist eine Vertikalachse. Dadurch ist es ermöglicht, dass die Rohrleitung an dem Traggestell mit einer vertikalen Ausrichtung aufgenommen wird, beispielsweise indem sich die Helixform der Rohrleitung um die als Vertikalachse ausgerichtete Raumachse verläuft. Durch diese Ausrichtung der Rohrleitung ist ein Wärmeaustausch ermöglicht, bei welchem auf eine Temperaturschichtung in einem Wärmespeicher Einfluss genommen werden kann.

Das Traggestell umfasst wenigstens einen Querverbinder, über welchen die Halteelemente miteinander verbunden sind, um zusammen mit den Halteelementen einen frei aufstellbaren Verbund zu bilden. Der wenigstens eine Querverbinder kann ein Holzmaterial oder das vorstehend beschriebene Holzmaterial aufweisen oder daraus bestehen. Beispielsweise ist der Verbinder ringförmig, insbesondere geschlossen ringförmig ausgebildet. Dadurch ergibt sich ein Stabilitätsvorteil.

Eine mögliche Ausführungsform besteht darin, dass die Rohrleitung ein Wellrohr aufweist oder daraus besteht. Unter dem Begriff "Wellrohr" ist in der vorliegenden Offenbarung insbesondere eine Rohrleitung mit wellenförmig wechselndem Durchmesser zu verstehen, welche aufgrund der Wellung flexibel ist. Bei dem Wellrohr kann es sich um ein metallisches Wellrohr handeln. Beispielsweise weist das Wellrohr Edelstahl auf oder besteht daraus. Grundsätzlich kann das Wellrohr auch ein Kunststoffmaterial aufweisen oder daraus bestehen. In der vorliegenden Offenbarung ist unter dem Begriff "Wellrohr" auch ein Wellschlauch umfasst.

Bei einer weiteren Ausführungsform umfasst der Behälter des Wärmespeichers ein Holzmaterial, durch welches der Innenraum des Behälters zumindest teilweise gebildet ist. Bei dem Holzmaterial kann es sich um das vorstehend beschriebene Holzmaterial handeln. Insbesondere ist der Behälter zumindest teilweise zylinderförmig ausgebildet und umfasst eine um eine Mittelachse verlaufende Seitenwandung, eine Bodenwandung und eine Deckenwandung, welche den Innenraum umgeben und/oder begrenzen.

Bei einer weiteren Ausführungsform weist die Seitenwandung eine Vielzahl von länglichen Wandelementen auf. Insbesondere erstrecken sich die Wandelemente mit ihrer Längserstreckung in Richtung der Mittelachse, wobei benachbarte Wandelemente längsseitig aneinander liegen. Beispielsweise ist der Behälter als fassartiger Holzbehälter mit einem das Holzmaterial aufweisenden Holzkörper ausgebildet, welcher eine Vielzahl von Dauben umfasst. Beispielsweise bilden die Dauben die Seitenwandung des Behälters oder die Seitenwandung weist die Dauben auf.

Unter dem Begriff "Daube" ist in der vorliegenden Offenbarung insbesondere ein Vollholz zu verstehen, welches entlang der natürlichen Faser des Holzes gespalten ist und vorzugsweise auf einen vorgegebenen Feuchtigkeitsgehalt getrocknet ist. Bevorzugt ist die Daube beispielsweise durch ein Dampfbiegeverfahren in eine gewölbte Form gebracht.

Weitere Einzelheiten und Merkmale ergeben sich aus der nachfolgenden Beschreibung mehrerer Ausführungsbeispiele anhand der Zeichnung. Es zeigen
- Fig. 1: einen Wärmetauscher einer möglichen Ausführungsform eines Wärmespeichers mit einem Traggestell und einer daran angebrachten Rohrleitung in einer perspektivischen Darstellung,
- Fig. 2: das Traggestell der Figur 1 in einer perspektivischen Darstellung,
- Fig. 3: das Traggestell der Figur 2 in einer weiteren perspektivischen Darstellung,
- Fig. 4: ein Halteelement des Traggestells der Figuren 2 und 3 in einer Explosionsdarstellung,
- Fig. 5: einen vergrößerten Ausschnitt des Halteelements der Figur 4 in einer perspektivischen Darstellung,
- Fig. 6: einen vergrößerten Ausschnitt des Halteelements der Figur 4 in einer weiteren perspektivischen Darstellung,
- Fig. 7: ein Traggestell einer weiteren möglichen Ausführungsform des Wärmespeichers,
- Fig. 8: ein Halteelement des Traggestells der Figur 7 in einer Seitenansicht,
- Fig. 9: einen vergrößerten Ausschnitt des Halteelements der Figur 8 in einer Explosionsdarstellung und
- Fig. 10: eine nochmals weitere Ausführungsform eines Wärmespeichers in perspektivischer Darstellung.

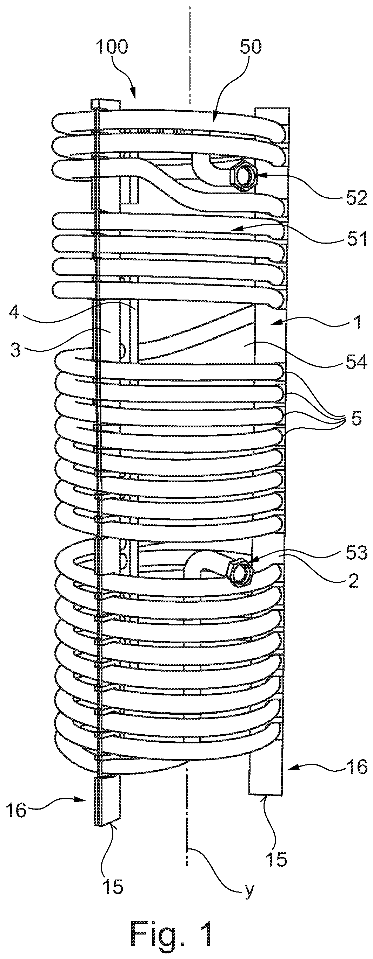

Figur 1 zeigt - in einer schematischen Darstellung - einen Wärmetauscher 100 einer möglichen Ausführungsform eines Wärmespeichers in einer perspektivischen Ansicht von vorne. Der Wärmespeicher hat einen Behälter, welcher eingerichtet ist, in seinem Innenraum ein flüssiges Wärmespeichermedium aufzunehmen. Im Innenraum des Behälters ist der Wärmetauscher 100 angeordnet.

Der Wärmetauscher 100 umfasst eine Rohrleitung 50, welche eingerichtet ist, von einem Wärmeträgermedium durchströmt zu werden. Die Rohrleitung 50 ist ausgebildet, beispielsweise über ihre Rohrwandung, einen Wärmeaustausch zwischen dem durchströmenden Wärmeträgermedium und einem die Rohrleitung umgebenden Wärmeträgermedium und/oder Wärmespeichermedium zu bewirken.

Bevorzugt weist die Rohrleitung 50, beispielsweise an ihren gegenüberliegenden Enden, eine Anschlussstelle 52 bzw. 53 auf, beispielsweise um darüber an ein (in der Figur 1 nicht dargestelltes) Leitungssystem angeschlossen zu werden. Über eine der Anschlussstellen 52, 53 kann das Wärmeträgermedium in die Rohrleitung 50 einströmen und über die andere Anschlussstelle 52 bzw. 53 kann das Wärmeträgermedium aus der Rohrleitung 50 ausströmen.

Bei dem Wärmeträgermedium kann es sich um ein Fluid, insbesondere ein Gas oder eine Flüssigkeit, wie beispielsweise Wasser, handeln. Bei der Rohrleitung 50 kann es sich um ein Wellrohr, insbesondere ein metallisches Wellrohr, handeln. Beispielsweise weist das Wellrohr ein Edelstahl oder eine Edelstahllegierung auf oder besteht daraus. Die Anschlussstellen 52, 53 können einen Schraubanschluss aufweisen oder als Schraubanschluss ausgebildet sein. Alternativ können die Anschlussstellen 52, 53 einen Schweiß-/Lötanschluss aufweisen oder als Schweiß-/Lötanschluss ausgebildet sein.

Der Wärmetauscher 100 umfasst ein Traggestell 1 für die Rohrleitung 50. Das Traggestell 1 umfasst mehrere, beispielsweise drei Halteelemente 2, 3, 4. Beispielsweise ist wenigstens eines der Halteelemente 2, 3, 4 leistenförmig oder balkenförmig ausgebildet. Die Halteelemente 2, 3, 4 sind eingerichtet, die Rohrleitung 50 zu halten. Die Halteelemente 2, 3, 4 erstrecken sich jeweils mit ihrer Längserstreckung in Richtung einer Raumachse y, insbesondere einer gleichen Raumachse y. Beispielsweise sind die Halteelemente 2, 3, 4 bezüglich ihrer Längserstreckung parallel oder im Wesentlichen parallel zueinander angeordnet. Die Halteelemente 2, 3, 4 weisen jeweils mehrere oder eine Vielzahl von Anbindungsstellen 5 für die Rohrleitung 50 auf, um daran die Rohrleitung 50 zu halten, insbesondere zu befestigen.

In Richtung der Längserstreckung der Halteelemente 2, 3, 4 gesehen, sind die Anbindungsstellen 5 hintereinanderliegend in der Weise angeordnet, dass die Rohrleitung 50 in einer vorgegebenen Ausrichtung bzw. Lage gehalten ist. In Richtung der Längserstreckung der Halteelemente 2, 3, 4 gesehen, sind die Anbindungsstellen 5 hintereinanderliegend in der Weise angeordnet, dass die Rohrleitung 50 zumindest über einen Längenabschnitt in einer sich um die Raumachse y verlaufenden und in Richtung der Raumachse y erstreckenden Helixform 51 gehalten ist, insbesondere wendelförmig um die Raumachse y gewickelt bzw. gewunden ist.

Bevorzugt umfasst das Traggestell 1 eine Aufstellfläche 15 zum Aufstellen auf einem (in der Figur 1 nicht dargestellten) Untergrund. Beispielsweise ist die Aufstellfläche 15 einem längsseitigen Ende 16 oder Endbereich der Halteelemente 2, 3, 4 zugeordnet, insbesondere dort ausgebildet. Auch kann es sein, dass das Traggestell 1 ein (in der Figur 1 nicht dargestelltes) Fußelement, insbesondere separates Fußelement umfasst, an welchem die Aufstellfläche 15 ausgebildet ist. Beispielsweise stützt sich wenigstens eines der Halteelemente 2, 3, 4 auf dem Fußelement ab und/oder ist daran befestigt.

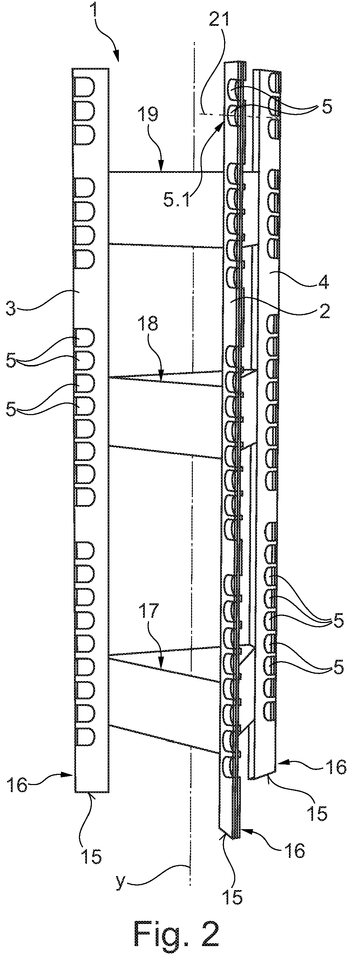

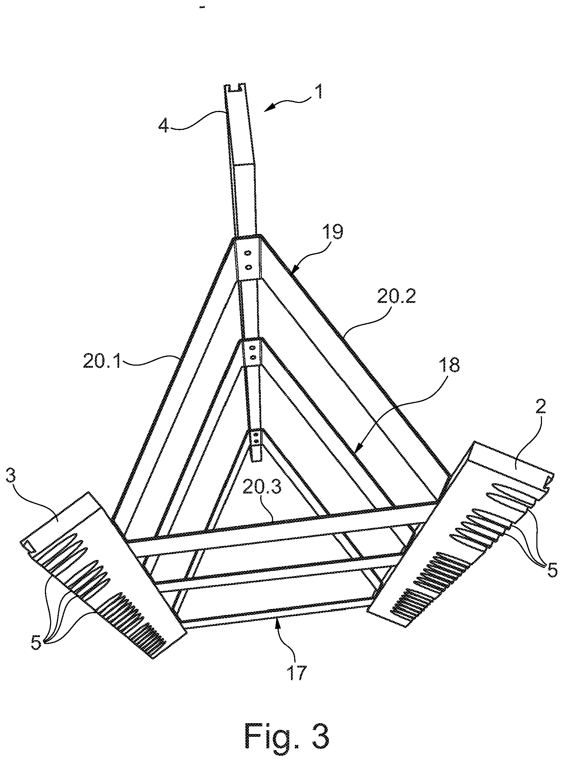

Figur 2 zeigt beispielhaft das Traggestell 1 der Figur 1 in einer perspektivischen Ansicht von vorne. Figur 3 zeigt beispielhaft das Traggestell 1 der Figur 1 in einer perspektivischen Ansicht von oben. Wie insbesondere aus den Figuren 2 und 3 ersichtlich ist, hat das Traggestell 1 wenigstens einen, vorzugsweise zwei oder drei Querverbinder 17, 18, 19 zum Verbinden der Halteelemente 2, 3, 4. Bevorzugt ist wenigstens einer der Querverbinder 17, 18, 19 mit wenigstens zwei der Halteelemente 2, 3, 4 verbunden. Beispielsweise sind die Halteelemente 2, 3, 4, vorzugsweise jeweils, an wenigstens einem der Querverbinder 17, 18, 19 befestigt. Dazu können Befestigungselemente, insbesondere separate Befestigungselemente, wie beispielsweise Schraubenelemente, genutzt sein.

Bevorzugt sind in Richtung der Raumachse y gesehen, wenigstens zwei der Querverbinder 17, 18, 19 hintereinanderliegend in einem Abstand zueinander angeordnet. Die Querverbinder 17, 18, 19 bilden zusammen mit den Halteelementen 2, 3, 4 eine Verbundstruktur aus. Die Verbundstruktur ist derart stabil ausgebildet, dass das Traggestell 1 frei aufgestellt werden kann, wobei beispielsweise die Halteelemente 2, 3, 4 sich mit ihrer Längserstreckung in vertikaler Richtung oder im Wesentlichen in vertikaler Richtung erstrecken und/oder die Raumachse y eine Vertikalachse ist.

Bevorzugt ist wenigstens einer der Querverbinder 17, 18, 19 ringförmig ausgebildet und/oder bildet einen um die Raumachse y umlaufenden Ring, insbesondere geschlossenen Ring. Bevorzugt weist der wenigstens eine Querverbinder 17 bzw. 18 bzw. 19 eine in Richtung der Raumachse y sich erstreckende Flächenstruktur und/oder eine quer zur Raumachse y sich erstreckende Flächenstruktur auf.

Bevorzugt hat der wenigstens eine Querverbinder 17 bzw. 18 bzw. 19 oder wenigstens einer der Querverbinder 17, 18, 19 einen sich quer zur Raumachse y erstreckenden Längenabschnitt 20.1 bzw. 20.2 bzw. 20.3, insbesondere Längsabschnitt, welcher an seinen gegenüberliegenden längsseitigen Enden bzw. Endbereichen mit jeweils einem der Halteelemente 2, 3, 4 verbunden ist. Bevorzugt ist wenigstens einer der Querverbinder 17, 18, 19 oder der wenigstens eine Querverbinder 17 bzw. 18 bzw. 19 ein Metallteil, welches ein metallisches Material, wie beispielsweise Edelstahl, aufweist oder daraus besteht.

Wie insbesondere aus den Figuren 2 und 3 ersichtlich ist, können die Halteelemente 2, 3, 4 in der Weise angeordnet sein, dass die Anbindungsstellen 5 radial außenliegend bezüglich der Raumachse y vorliegen. Beispielsweise sind die Halteelemente 2, 3, 4 radial außenliegend an dem wenigstens einen Querverbinder 17 bzw. 18 bzw. 19 angeordnet. In diesem Fall befindet sich das Traggestell 1 innerhalb eines Innenbereichs 54, welcher durch den vorzugsweise wendelförmigen Verlauf der Rohrleitung 50 gebildet ist, wie beispielsweise aus der Figur 1 ersichtlich ist.

Alternativ können die Halteelemente 2, 3, 4 in der Weise angeordnet sein, dass die Anbindungsstellen 5 radial innenliegend bezüglich der Raumachse y vorliegen. Beispielsweise sind die Halteelemente 2, 3, 4 radial innenliegend an dem wenigstens einen Querverbinder 17 bzw. 18 bzw. 19 angeordnet. In diesem Fall liegt eine in den Figuren nicht dargestellte Ausführungsform vor, in welcher das Traggestell bzw. die Halteelemente 2, 3, 4 den vorzugsweise wendelförmigen Verlauf der Rohrleitung 50 umgeben, also in Richtung der Raumachse y gesehen, zwischen den Halteelementen 2, 3, 4 die Rohrleitung zumindest teilweise angeordnet ist.

Das Traggestell 1 weist ein Holzmaterial auf oder besteht daraus. Diesbezüglich weist wenigstens eines der Halteelemente 2, 3, 4 ein solches Holzmaterial auf oder besteht daraus. Ergänzend oder alternativ kann der wenigstens eine Querverbinder 17 bzw. 18 bzw. 19 ein Holzmaterial aufweisen oder daraus bestehen. Grundsätzlich kann das Holzmaterial des wenigstens einen Halteelements 2 bzw. 3 bzw. 4 mit dem Holzmaterial des wenigstens einen Querverbinders 17 bzw. 18 bzw. 19 identisch oder voneinander verschieden sein. Bevorzugt handelt es sich bei dem Holzmaterial um ein Vollholz. Bevorzugt ist das Holzmaterial getrocknet. Beispielsweise weist das Holzmaterial eine vorgegebene Feuchtigkeit auf oder unterschreitet eine vorgegebene Feuchtigkeit.

Alternativ kann das Holzmaterial ein Holz aufweisender Verbundwerkstoff, wie beispielsweise ein Holz-Kunststoff-Verbundwerkstoff (WPC, Wood-Plastic-Composite) sein. Auch kann der Holz aufweisende Verbundwerkstoff ein Betonwerkstoff mit Holzfasern sein. Bevorzugt enthält das Holzmaterial Hartholz, wie beispielsweise Laubholz, oder Weichholz, wie beispielsweise Nadelholz, oder besteht daraus. Beispielsweise enthält das Holzmaterial ein Eichenholz oder ein Akazienholz oder ein Robinienholz oder ein Kastanienholz oder ein Pappelholz oder besteht daraus.

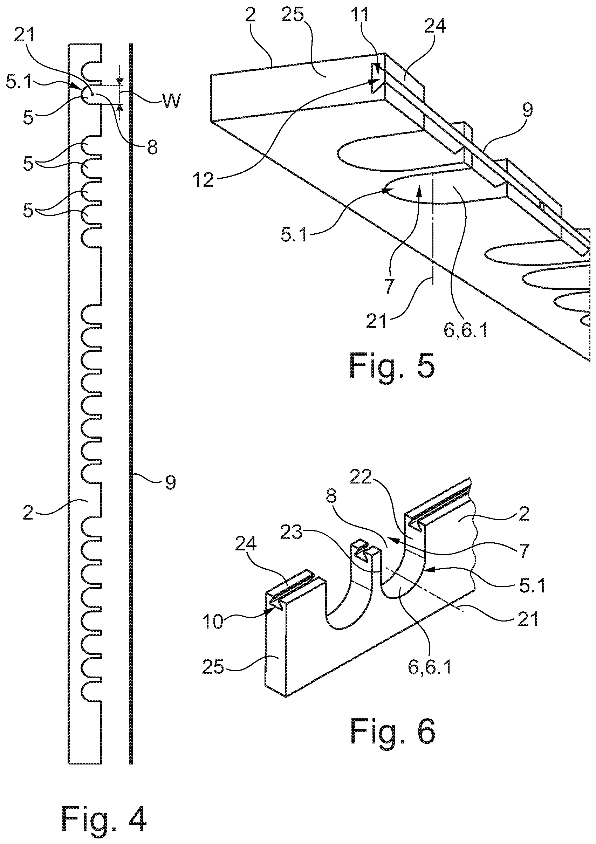

Figur 4 zeigt beispielhaft eines der Halteelemente 2, 3, 4, insbesondere das Halteelement 2. Figuren 5 und 6 zeigen jeweils einen vergrößerten Ausschnitt aus einem Bereich eines längsseitigen Endes des einen Halteelements 2. Wie daraus ersichtlich ist, kann wenigstens eine der Anbindungsstellen 5 an dem Halteelement 2 ausgebildet, insbesondere ausgeformt sein. Beispielsweise weist die wenigstens eine Anbindungsstelle 5.1 ein Loch 6 auf oder ist daraus gebildet, um daran die Rohrleitung 50 (Figur 1) anzubringen. Beispielsweise liegt das Loch 6 in dem Holzmaterial vor bzw. ist in das Holzmaterial durch Materialausnehmung eingebracht. Bevorzugt vertieft sich das Loch 6 in Richtung einer Achse 21, wobei die Achse 21 quer zur Raumachse y (Figur 2) des Traggestells 1 verläuft.

Das Loch 6 weist eine lichte Weite w auf, welche beispielsweise derart bemessen ist, dass in dem Loch 6 die Rohrleitung 50 (Figur 1) beispielsweise mit Spiel aufgenommen werden kann und bei einem Quellen des Holzmaterials eine dadurch bedingte Klemmkraft von der Berandung des Lochs 6 auf die Rohrleitung 50 wirkt. Die lichte Weite w bezieht sich dabei insbesondere auf den getrockneten Zustand des Holzmaterials, welcher beispielsweise bei Herstellung des Traggestells 1 bzw. Herstellung des einen Halteelements 2 vorliegt, beispielsweise wenn das Loch 6 eingebracht wird und/oder die Rohrleitung 50 an dem Traggestell 1 montiert wird.

Sofern das Traggestell 1 als Bestandteil des Wärmetauschers in einem mit Flüssigkeit gefüllten Wärmespeicher vorliegt, kommt es aufgrund der Flüssigkeit zu einem Quellen des Holzmaterials des Traggestells 1. Dadurch verengt sich das Loch 6 und die Berandung des Lochs 6 drückt auf die Rohrleitung 50 und übt die vorstehend beschriebene Klemmkraft aus. Durch die Klemmkraft kann es bewirkt sein, dass die Rohrleitung 50 in dem Loch 6 fest gehalten ist.

Alternativ kann die lichte Weite w derart bemessen sein, dass in dem Loch 6 die Rohrleitung 50 (Figur 1) beispielsweise mit Spiel aufgenommen werden kann und bei einem Quellen des Holzmaterials die Rohrleitung 50 in dem Loch 6 lose aufgenommen bleibt, also eine Klemmkraft nicht entsteht.

Bevorzugt ist das Loch 6 ein Durchgangsloch 6.1. Bevorzugt ist die Achse 21 die Mittelachse des Durchgangslochs 6.1. Bevorzugt weist das Durchgangsloch 6.1 einen tangential und/oder quer bezüglich der Raumachse y verlaufenden Durchgang 7 durch das Halteelement 2 auf, um darin die Rohrleitung 50 (Figur 1) aufzunehmen. Beispielsweise handelt es sich bei dem Loch 6 bzw. dem Durchgangsloch 6.1 um eine in das Holzmaterial eingebrachte Bohrung bzw. Durchgangsbohrung.

Bevorzugt weist das Loch 6 bzw. Durchgangsloch 6.1 eine Querschnittskontur auf, welche mit der Querschnittskontur der Rohrleitung 50 korrespondiert oder im Wesentlichen korrespondiert. Sofern die Rohrleitung 50 beispielsweise einen runden, insbesondere kreisrunden Querschnitt aufweist, weist das Loch 6 bzw. das Durchgangsloch 6.1 einen Querschnitt auf, welcher zumindest über einen Umfangsabschnitt eine runde, insbesondere kreisrunde Kontur, insbesondere eine damit korrespondierende runde bzw. kreisrunde Kontur hat.

Bevorzugt ist das Durchgangsloch 6.1 über einen Abschnitt seiner Umfangswandung offen ausgebildet bzw. weist dort eine Einführöffnung 8 auf, um darüber die Rohrleitung 50 längsseitig durch eine Bewegung in radialer Richtung bezüglich der Raumachse y und/oder in radialer Richtung bezüglich der Achse 21 in das Durchgangsloch 6.1 einbringen zu können. Bevorzugt umfasst die Einführöffnung 8 zwei einander gegenüberliegende Wandungsflächen 22, 23, welche beispielweise die Einführöffnung 8 seitlich begrenzen. Bevorzugt grenzen die Wandungsflächen 22, 23 an die Umfangswandung des Durchgangslochs 6.1 an und bilden beispielsweise einen Zugangskanal zu dem Durchgangsloch 6.1. Bevorzugt verlaufen die Wandungsflächen 22, 23 zumindest über einen Abschnitt parallel zueinander oder zumindest im Wesentlichen parallel zueinander.

Um die Rohrleitung 50 gegen ein Herausbewegen über die Einführöffnung 8 zu sichern, kann dem Halteelement 2 ein Sicherungselement 9, insbesondere ein separates Sicherungselement 9, zugeordnet sein. Beispielsweise ist das Sicherungselement 9 an dem Halteelement 2 angebracht und verschließt die Einführöffnung 8 zumindest teilweise, wie insbesondere aus der Figur 5 ersichtlich ist. In der Figur 6 ist das Halteelement 2 ohne das Sicherungselement 9 dargestellt. In der Figur 4 sind das Halteelement 2 und das Sicherungselement 9 in einer Explosionsdarstellung gezeigt.

Beispielsweise ist das Sicherungselement 9 länglich, insbesondere leistenförmig oder stabförmig ausgebildet. Beispielsweise handelt es sich bei dem Sicherungselement 9 um ein Holzbauteil, welches ein Holzmaterial aufweist oder daraus besteht. Das Holzmaterial kann das vorstehend beschriebene Holzmaterial sein. Das Holzmaterial kann identisch mit dem Holzmaterial des wenigstens einen Halteelements 2 bzw. 3 bzw. 4 sein. Grundsätzlich kann das Sicherungselement 9 auch ein Kunststoffbauteil oder ein Metallbauteil sein. Beispielsweise weist das Sicherungselement 9 einen in Richtung seiner Längserstreckung verlaufenden gleichförmigen oder im Wesentlichen gleichförmigen Querschnitt auf. Bevorzugt erstreckt sich das Sicherungselement 9 mit seiner Längserstreckung zumindest über mehrere der Anbindungsstellen 5, beispielsweise um dort seine Sicherungsfunktion im Hinblick auf die Rohrleitung 50 auszuüben.

Das Sicherungselement 9 kann über eine Steckverbindung an dem Halteelement 2 befestigt sein. Dazu kann das Halteelement 2 eine Einsteckaufnahme 10 aufweisen, in welche das Sicherungselement 9 beispielsweise über einen entsprechenden Steckabschnitt 11 bzw. Streckenabschnitt unter Abdeckung der Einführöffnung 8 eingeführt ist bzw. einführbar ist. Bevorzugt ist die Einsteckaufnahme 10 an dem Halteelement 2 ausgeformt, insbesondere an dem Holzmaterial des Halteelements 2 ausgeformt. Bevorzugt ist die Einsteckaufnahme 10 durch eine sich quer zur Achse 21 und in Richtung der Raumachse y vertiefende Vertiefung an dem Halteelement 2, insbesondere dem Holzmaterial des Halteelements 2, gebildet. Dadurch ist ein seitliches Einschieben des Sicherungselements 9 in die Einführöffnung 8 hinein ermöglicht.

Beispielsweise ist das Halteelement 2 leistenförmig oder dielenförmig oder brettförmig ausgebildet. Beispielsweise weist das Halteelement 2 eine Längsseite 24 und eine dazu quer angeordnete Stirnseite 25 bzw. Querseite auf. Beispielsweise ist an der Längsseite 24 die Einführöffnung 8 angeordnet. Beispielweise ist ferner an der Stirnseite 25 die Vertiefung angeordnet welche sich längsseitig, also in Längsrichtung des Halteelements 2, vertieft. Bevorzugt vertieft sich die Vertiefung in der Weise, dass das eingeführte Sicherungselement 9 die Einführöffnung 8 zumindest teilweise versperrt.

Bevorzugt ist der Steckabschnitt 11 an dem Sicherungselement 9 angeformt und/oder durch das Sicherungselement 9 gebildet. Bevorzugt sind die Einsteckaufnahme 10 und der Steckabschnitt 11 in der Weise ausgebildet, dass die Steckverbindung eine Schwalbenschwanzverbindung 12 ausbildet. Dadurch ist beispielsweise das Sicherungselement 9 an dem Halteelement 2 quer zur Achse 21 und/oder quer zur Raumachse y, insbesondere der durch die Einführöffnung 8 gebildeten Einführrichtung für die Rohrleitung 50, formschlüssig gehalten.

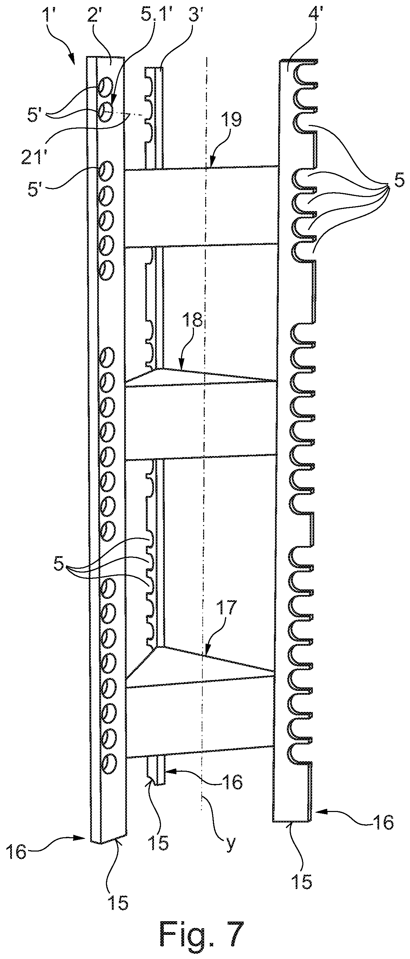

Figur 7 zeigt ein Traggestell 1' einer weiteren Ausführungsform des Wärmespeichers in einer perspektivischen Ansicht von vorne. Bauteile des Traggestells 1' der Figur 7, welche mit Bauteilen des Traggestells 1 der Figur 2 baugleich oder funktionsgleich sind, sind mit gleichen Bezugszeichen versehen; insofern wird auf die Beschreibung zu dem Traggestell 1 der Figur 2 verwiesen.

Das Traggestell 1' der Figur 7 hat mehrere längliche Halteelemente 2', 3', 4'. Beispielsweise ist wenigstens eines der Halteelemente 2', 3', 4' leistenförmig oder balkenförmig ausgebildet. Die Halteelemente 2', 3', 4' sind eingerichtet, die Rohrleitung 50 (Figur 1) zu halten. Die Halteelemente 2', 3', 4' erstrecken sich mit ihrer Längserstreckung in Richtung der Raumachse y. Die Halteelemente 2', 3', 4' weisen jeweils mehrere oder eine Vielzahl von Anbindungsstellen 5' für die Rohrleitung 50 auf, um daran die Rohrleitung 50 zu halten, insbesondere zu befestigen.

In Richtung der Längserstreckung der Halteelemente 2', 3', 4' gesehen, sind die Anbindungsstellen 5' hintereinanderliegend in der Weise angeordnet, dass die Rohrleitung 50 in einer vorgegebenen Ausrichtung bzw. Lage gehalten ist. In Richtung der Längserstreckung der Halteelemente 2', 3', 4' gesehen, sind die Anbindungsstellen 5' hintereinanderliegend in der Weise angeordnet, dass die Rohrleitung 50 zumindest über einen Längenabschnitt in einer sich um die Raumachse y verlaufenden und in Richtung der Raumachse y erstreckenden Helixform 51 (Figur 1) gehalten ist, insbesondere wendelförmig um die Raumachse y gewickelt bzw. gewunden ist.

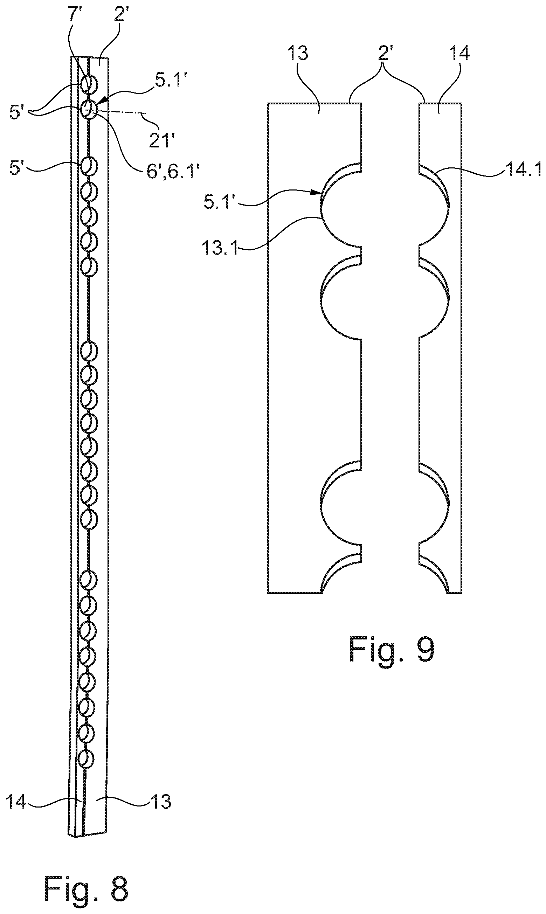

Bevorzugt ist bei wenigstens einem der Halteelemente 2', 3', 4', insbesondere bei dem Halteelement 2', wenigstens eine der Anbindungsstellen 5' an dem wenigstens einen Halteelement 2' bzw. 3' bzw. 4', beispielsweise an dem Halteelement 2', ausgebildet, insbesondere ausgeformt. Figur 8 zeigt beispielhaft das eine Halteelement 2' in einer Seitenansicht. Figur 9 zeigt einen vergrößerten Ausschnitt aus einem Bereich eines längsseitigen Endes des einen Halteelements 2'.

Beispielsweise weist die wenigstens eine Anbindungsstelle 5.1' ein Loch 6' auf oder ist daraus gebildet, um daran die Rohrleitung 50 (Figur 1) anzubringen. Beispielsweise liegt das Loch 6' in dem Holzmaterial vor bzw. ist in das Holzmaterial durch Materialausnehmung eingebracht. Bevorzugt vertieft sich das Loch 6' in Richtung einer Achse 21', wobei die Achse 21' quer zur Raumachse y (Figur 2) des Traggestells 1' verläuft.

Bevorzugt ist das Loch 6' ein Durchgangsloch 6.1'. Bevorzugt ist die Achse 21' die Mittelachse des Durchgangslochs 6.1'. Bevorzugt weist das Durchgangsloch 6.1' einen tangential und/oder quer bezüglich der Raumachse y verlaufenden Durchgang 7' durch das Halteelement 2' auf, um darin die Rohrleitung 50 (Figur 1) aufzunehmen. Beispielsweise handelt es sich bei dem Loch 6' bzw. dem Durchgangsloch 6.1' um eine in das Holzmaterial eingebrachte Bohrung bzw. Durchgangsbohrung. Bevorzugt weist das Loch 6' bzw. Durchgangsloch 6.1' eine Querschnittskontur auf, welche mit der Querschnittskontur der Rohrleitung 50 korrespondiert oder im Wesentlichen korrespondiert.

Bei dem Traggestell 1' ist das wenigstens eine Halteelement 2' bzw. 3' bzw. 4', insbesondere das Halteelement 2', wenigstens zweiteilig oder ausschließlich zweiteilig ausgebildet und umfasst zwei Einzelteile 13, 14, welche das Holzmaterial aufweisen oder daraus bestehen, insbesondere das gleiche Holzmaterial aufweisen oder daraus bestehen. Bevorzugt sind die Einzelteile 13, 14 jeweils länglich ausgebildet. Bevorzugt erstrecken sich die Einzelteile 13, 14 jeweils mit ihrer Längserstreckung in Längsrichtung des Halteelement 2'.

Bevorzugt sind die Einzelteile 13, 14 eingerichtet, miteinander verbunden zu werden, insbesondere längsseitig miteinander verbunden zu werden. Beispielsweise sind die Einzelteile 13, 14 mittels Befestigungselementen, insbesondere separaten Befestigungselementen, wie beispielsweise Schraubelementen oder dergleichen, gegeneinander befestigt, insbesondere längsseitig gegeneinander befestigt. Ergänzend oder alternativ können die Einzelteile 13, 14 auch durch Kleben miteinander verbunden sein, insbesondere gegeneinander befestigt sein.

Bevorzugt ist an den Einzelteilen 13, 14 jeweils ein Umfangsabschnitt 13.1 bzw. 14.1 des Lochs 6' bzw. des Durchgangslochs 6.1' ausgeformt. Bevorzugt sind die Umfangsabschnitte 13.1, 14.1 in der Weise ausgebildet, dass sie die Umfangskontur der Rohrleitung 50 zumindest teilweise umgreifen. Sofern die Rohrleitung 50 beispielsweise einen kreisrunden Querschnitt aufweist, weist das Loch 6' bzw. das Durchgangsloch 6.1' einen vorzugsweise damit korrespondierenden kreisrunden Querschnitt auf. In diesem Fall bilden dann beispielsweise die Umfangsabschnitte 13.1, 14.1 jeweils einen Kreisbogen, beispielsweise eines Halbkreises aus.

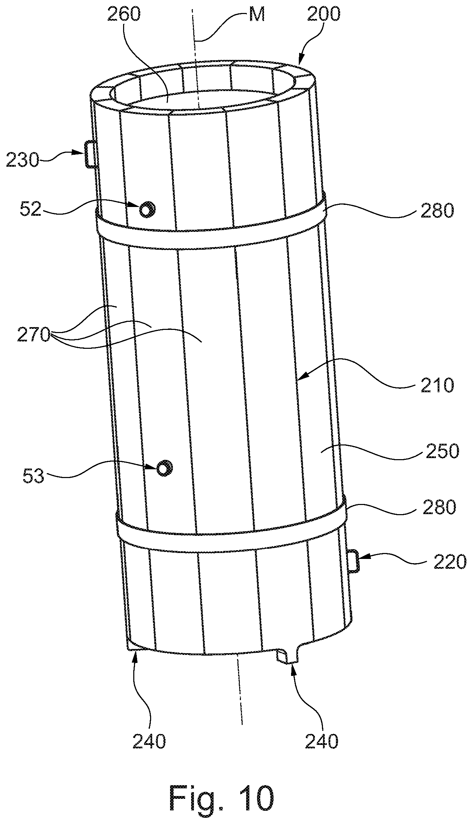

Figur 10 zeigt eine nochmals weitere Ausführungsform eines Wärmespeicher 200. Der Wärmespeicher 200 ist beispielsweise zur Heizungsunterstützung und/oder Brauchwassererwärmung geeignet. Bei dem Wärmespeicher 200 kann es sich um einen Pufferspeicher oder einen Brauchwasserspeicher handeln. Der Wärmespeicher 200 umfasst einen Behälter 210, welcher eingerichtet ist, in seinem Innenraum ein flüssiges Wärmespeichermedium aufzunehmen.

Der Wärmespeicher 200 verwendet das Traggestell 1 oder das Traggestell 1' als Bestandteil eines Wärmetauschers in Art des Wärmetauschers 100 gemäß der Figur 1. In dem Innenraum ist das Traggestell 1 oder das Traggestell 1' zusammen mit der daran angebrachten Rohrleitung 50 aufgenommen. Bevorzugt bildet die Rohrleitung 50 zusammen mit dem Traggestell 1 oder dem Traggestell 1' eine vormontierte Einheit, wie sie beispielsweise aus der Figur 1 ersichtlich ist. Bevorzugt ist diese Einheit in dem Behälter 210 aufgestellt.

Beispielsweise sind die Anschlussstellen 52, 53 der Rohrleitung 50, wie sie beispielsweise aus der Figur 1 ersichtlich sind, am Behälter 210 angebracht und/oder ragen über entsprechende Öffnungen bzw. Durchgänge aus dem Behälter 210 heraus, beispielsweise um darüber ein das Wärmeträgermedium führendes Rohrleitungssystem anschließen zu können. Bei dem Rohrleitungssystem kann es sich um ein Rohrleitungssystem zur Verteilung eines in einer Heizungsanlage erwärmten Wärmeträgermediums handeln.

Bevorzugt weist der Behälter 210 wenigstens einen, beispielsweise zwei Anschlüsse 220 bzw. 230 auf, um den Innenraum mit einem (in der Figur 10 nicht dargestellten) Rohrleitungssystem strömungsmäßig zu verbinden und/oder den Innenraum 2 zu befüllen oder zu entleeren. Beispielsweise ist über die Anschlüsse 220, 230 der Wärmespeicher 200 an einen Wärmekreis bzw. Heizkreis einer Wärmeversorgungsanlage anzuschließen, wenn beispielsweise der Wärmespeicher 200 als Pufferspeicher genutzt werden soll. Auch kann über die Anschlüsse 220, 230 der Wärmespeicher 200 an ein Trinkwassernetz angeschlossen werden, wenn beispielsweise der Wärmespeicher 200 als Brauchwasserspeicher bzw. Heißwasserspeicher genutzt werden soll.

Bevorzugt weist der Behälter 210 im Bereich seines unteren Endes, insbesondere seines längsseitigen unteren Endes eine Aufstandsfläche 240 auf, um darüber auf einem Untergrund aufgestellt zu werden. Bevorzugt ist der Behälter 210 zylinderförmig ausgebildet und umfasst eine um eine Mittelachse M verlaufende Seitenwandung 250, einen (in der Figur 10 nicht sichtbaren) Boden und eine Decke 260, welche den Innenraum umgeben. Bevorzugt weist die Seitenwandung 250 eine Vielzahl von länglichen Wandelementen 270 auf. Bevorzugt erstrecken sich die Wandelemente 270 mit ihrer Längserstreckung in Richtung der Mittelachse M, wobei benachbarte Wandelemente längsseitig aneinander liegen.

Bevorzugt weist der Behälter ein Holzmaterial auf, durch welches der Innenraum zumindest teilweise gebildet ist bzw. begrenzt ist. Bei dem Holzmaterial kann es sich um das vorstehend beschriebene Holzmaterial handeln. Wie aus der Figur 10 ersichtlich ist, kann es sich bei dem Behälter um einen fassartigen Holzbehälter handeln, wobei die Wandelemente 270 durch Dauben gebildet sind. Um die Wandelemente 270 umfangsseitig zusammen zu halten, können Ringstrukturen 280, insbesondere ringförmige Bänder, wie beispielsweise Metallbänder, vorgesehen sein, welche den Außenumfang des Behälters 210 umgeben.

### Bezugszeichenliste

- 1, 1': Traggestell
- 2, 2' 3,: Halteelement
- 3': Halteelement
- 4, 4': Halteelement
- 5, 5': Anbindungsstellen
- 5.1: Anbindungsstelle
- 5.1': Anbindungsstelle
- 6, 6': Loch
- 6.1: Durchgangsloch
- 6.1': Durchgangsloch
- 7, 7': Durchgang
- 8: Einführöffnung
- 9: Sicherungselement
- 10: Einsteckaufnahme
- 11: Steckabschnitt
- 12: Schwalbenschwanzverbindung
- 13: Einzelteil
- 13.1: Umfangsabschnitt
- 14: Einzelteil
- 14.1: Umfangsabschnitt
- 15: Aufstellfläche
- 16: längsseitiges Ende
- 17: Querverbinder
- 18: Querverbinder
- 19: Querverbinder
- 20.1: Längenabschnitt
- 20.2: Längenabschnitt
- 20.3: Längenabschnitt
- 21, 21': Achse
- 22: Wandungsfläche
- 23: Wandungsfläche
- 24: Längsseite
- 25: Stirnseite

- 50: Rohrleitung
- 51: Helixform
- 52: Anschlussstelle
- 53: Anschlussstelle
- 54: Innenbereich

- 100: Wärmetauscher
- 200: Wärmespeicher
- 210: Behälter
- 220: Anschluss
- 230: Anschluss
- 240: Aufstandsfläche
- 250: Seitenwandung
- 260: Decke
- 270: Wandelemente
- 280: Ringstruktur

- y: Raumachse
- w: lichte Weite
- M: Mittelachse

## Patentansprüche

1. Wärmespeicher (200), beispielsweise zur Heizungsunterstützung und/oder Brauchwassererwärmung, mit einem Behälter (210), welcher eingerichtet ist, in seinem Innenraum ein flüssiges Wärmespeichermedium aufzunehmen, und mit einem in dem Innenraum des Behälters (210) angeordneten Wärmetauscher (100), welcher ein Traggestell (1) und eine daran angebrachte Rohrleitung (50) umfasst, die von einem Wärmeträgermedium durchströmbar ist, das Traggestell (1) umfassend
mehrere längliche Halteelemente (2, 3, 4), welche sich mit ihrer Längserstreckung in Richtung einer Raumachse (y) erstrecken und mehrere oder eine Vielzahl von Anbindungsstellen (5) für die Rohrleitung (50) aufweisen, wobei in Richtung der Längserstreckung der Halteelemente (2, 3, 4) gesehen, die Anbindungsstellen (5) hintereinanderliegend angeordnet sind, um die Rohrleitung (50) zumindest über einen Längenabschnitt in einer sich um die Raumachse (y) verlaufenden und in Richtung der Raumachse (y) erstreckenden Helixform zu halten, und
wenigstens einen Querverbinder (17; 18; 19), über welchen die Halteelemente (2, 3, 4) miteinander verbunden sind, um zusammen mit den Halteelementen (2, 3, 4) einen frei aufstellbaren Verbund zu bilden,
**dadurch gekennzeichnet, dass** wenigstens eines der Halteelemente (2, 3, 4) ein Holzmaterial aufweist oder daraus besteht.

2. Wärmespeicher nach Anspruch 1, wobei das Holzmaterial ein Vollholz ist und insbesondere Eichenholz oder Akazienholz oder Robinienholz oder Kastanienholz oder Pappelholz aufweist oder daraus besteht.

3. Wärmespeicher nach Anspruch 1 oder 2, wobei wenigstens eine der Anbindungsstellen (5) des wenigstens einen Halteelements (2; 3; 4) an dem wenigstens einen Halteelement (2; 3; 4) ausgebildet, insbesondere ausgeformt ist.

4. Wärmespeicher nach einem der vorhergehenden Ansprüche, wobei wenigstens eine der Anbindungsstellen (5) des wenigstens einen Halteelements (2; 3; 4) ein in dem Holzmaterial vorliegendes Loch (6) aufweist oder daraus gebildet ist, um daran die Rohrleitung (50) anzubinden, insbesondere direkt und/oder unmittelbar anzubinden oder über ein Befestigungselement anzubinden.

5. Wärmespeicher nach Anspruch 4, wobei das Holzmaterial getrocknet ist und eine vorgegebene Feuchtigkeit aufweist oder unterschreitet, und wobei das Loch (6) eine lichte Weite (w) hat und die lichte Weite (w) bemessen ist, um in dem Loch (6) die Rohrleitung (50) oder das Befestigungselement für die Rohrleitung (50) aufzunehmen, insbesondere mit Spiel aufzunehmen, und bei einem Quellen des Holzmaterials eine dadurch bedingte Klemmkraft auf die Rohrleitung (50) zu bewirken.

6. Wärmespeicher nach Anspruch 4 oder 5, wobei das Loch (6) ein Durchgangsloch (6.1) ist und das Durchgangsloch (6.1) einen tangential bezüglich der Raumachse (y) verlaufenden Durchgang (7) durch das wenigstens eine Halteelement (2; 3; 4) aufweist, um darin die Rohrleitung (50) aufzunehmen.

7. Wärmespeicher nach Anspruch 6, wobei das Durchgangsloch (6.1) an einer radial bezüglich der Raumachse (y) nach außen oder nach innen gewandten Seite eine Einführöffnung (8) aufweist, um darüber die Rohrleitung (50) längsseitig durch eine Bewegung in radialer Richtung bezüglich der Raumachse (y) in das Durchgangsloch (6.1) einzubringen.

8. Wärmespeicher nach Anspruch 7, wobei dem wenigstens einen Halteelement (2; 3; 4) ein Sicherungselement (9) zugeordnet ist, welches die Einführöffnung (8) zumindest teilweise verschließt, um die Rohrleitung (50) gegen ein Herausbewegen über die Einführöffnung (8) zu sichern.

9. Wärmespeicher nach Anspruch 8, wobei an dem wenigstens einen Halteelement (2; 3; 4) eine Einsteckaufnahme (10) ausgeformt ist, in welche das Sicherungselement (9) unter Abdeckung der Einführöffnung (8) eingeführt ist.

10. Wärmespeicher nach einem der Ansprüche 4 bis 6, wobei das wenigstens eine Halteelement (2'; 3'; 4') zweiteilig ausgebildet ist und zwei Einzelteile (13, 14) umfasst, welche eingerichtet sind, miteinander verbunden zu werden, wobei an den Einzelteilen (13, 14) jeweils ein Umfangsabschnitt des Loches (6) ausgeformt ist.

11. Wärmespeicher nach einem der vorhergehenden Ansprüche, umfassend eine Aufstellfläche (15) zum Aufstellen auf einem Untergrund, wobei die Aufstellfläche (15) einem längsseitigen Ende (16) der Halteelemente (2, 3, 4) zugeordnet ist.

12. Wärmespeicher nach einem der vorhergehenden Ansprüche, wobei die Rohrleitung (50) ein Wellrohr aufweist oder daraus besteht.

## Claims

1. Heat reservoir (200), for example for heating support and/or process water heating, having a container (210), which is set up to receive a liquid heat accumulator reservoir in its inner space, and having a heat exchanger (100) arranged in the inner space of the container (210), said heat exchanger comprising a support frame (1) and a pipe (50) attached thereto, said pipe being able to be flowed through by a heat transfer medium, the support frame (1) comprising
several elongated holding elements (2, 3, 4), which extend in the direction of a spatial axis (y) with their longitudinal extension and have several or a plurality of attachment points (5) for the pipe (50), wherein, when seen in the direction of the longitudinal extension of the holding elements (2, 3, 4), the attachment points (5) are arranged one behind the other, in order to hold the pipe (50) at least via a longitudinal portion in a helix shape running around the spatial axis (y) and extending in the direction of the spatial axis (y), and
at least one transverse connector (17; 18; 19), via which the holding elements (2, 3, 4) are connected to one another, in order to form, together with the holding elements (2, 3, 4), a combination that can be freely positioned,
**characterised in that** at least one of the holding elements (2, 3, 4) has a wooden material or consists thereof.

2. Heat reservoir according to claim 1, wherein the wooden material is a solid wood and has, in particular, oak wood or acacia wood or robinia woold or chestnut wood or poplar wood or consists thereof.

3. Heat reservoir according to claim 1 or 2, wherein at least one of the attachment points (5) of the at least one holding element (2; 3; 4) is formed, in particular moulded, on the at least one holding element (2; 3; 4).

4. Heat reservoir according to one of the preceding claims, wherein at least one of the attachment points (5) of the at least one holding element (2; 3; 4) has a hole (6) present in the wooden material or is formed therefrom, in order to attach the pipe (50) thereto, in particular to attach it directly and/or immediately, or to attach it via a fastening element.

5. Heat reservoir according to claim 4, wherein the wooden material is dried and has or does not meet a predetermined degree of moisture, and wherein the hole (6) has a clear width (w), and the clear width (w) is measured in order to receive the pipe (50) or the fastening element for the pipe (50) in the hole (6), in particular receive it with play, and, in the event of the wooden material swelling, to effect a clamping force caused by this on the pipe (50).

6. Heat reservoir according to claim 4 or 5, wherein the hole (6) is a passage hole (6.1), and the passage hole (6.1) has a passage (7) running tangentially in relation to the spatial axis (y) through the at least one holding element (2; 3; 4), in order to receive the pipe (50) therein.

7. Heat reservoir according to claim 6, wherein the passage hole (6.1) has an insertion opening (8) on a side turned outwardly or inwardly radially in relation to the spatial axis (y), in order to, via this, introduce the pipe (50) into the passage hole (6.1) longitudinally by a movement in the radial direction in relation to the spatial axis (y).

8. Heat reservoir according to claim 7, wherein a securing element (9) is allocated to the at least one holding element (2; 3; 4), said securing element at least partially sealing the insertion opening (8), in order to secure the pipe (50) against being moved out via the insertion opening (8).

9. Heat reservoir according to claim 8, wherein a plug-in receiver (10) is moulded on the at least one holding element (2; 3; 4), in which plug-in receiver the securing element (9) is introduced under cover of the introduction opening (8).

10. Heat reservoir according to one of claims 4 to 6, wherein the at least one holding element (2'; 3'; 4') is formed in two parts and comprises two individual parts (13, 14), which are set up to be connected to each other, wherein in each case a peripheral portion of the hole (6) is formed on the individual parts (13, 14).

11. Heat reservoir according to one of the preceding claims, comprising a positioning face (15) for position on a subsurface, wherein the positioning face (15) is allocated to a longitudinal end (16) of the holding elements (2, 3, 4).

12. Heat reservoir according to one of the preceding claims, wherein the pipe (50) has a corrugated pipe or consists thereof.

## Revendications

1. Réservoir thermique (200), par exemple pour le chauffage d'appoint et/ou la production d'eau chaude sanitaire, comprenant un récipient (210), dont l'espace intérieur est conçu pour contenir un fluide caloporteur, et un échangeur de chaleur (100) disposé dans l'espace intérieur du récipient (210) et comprenant un bâti de support (1) et un tuyau (50) fixé à ce bâti et à travers lequel circule un fluide caloporteur, ledit bâti de support (1) comprenant:
plusieurs éléments de retenue (2, 3, 4) allongés qui s'étendent longitudinalement selon la direction d'un axe spatial (y) et qui présentent plusieurs points d'attache (5) pour le tuyau (50), lesdits points d'attache (5) étant disposés les uns derrière les autres dans le sens longitudinal des éléments de retenue (2, 3, 4) de façon à maintenir le tuyau (50), au moins sur une section longitudinale, selon une forme hélicoïdale entourant l'axe spatial (y) et dirigée dans le sens dudit axe spatial (y), et
au moins un connecteur transversal (17; 18; 19), qui relie les éléments de retenue (2, 3, 4) entre eux pour former conjointement avec lesdits éléments de retenue (2, 3, 4) un ensemble librement installable,
**caractérisé en ce qu'**au moins un des éléments de retenue (2, 3, 4) comprend ou est constitué d'un matériau de type bois.

2. Réservoir thermique selon la revendication 1, dans lequel ledit matériau de type bois est du bois massif et comprend ou est constitué notamment de bois de chêne, de bois d'acacia, de bois de robinier, de bois de châtaignier ou de bois de peuplier.

3. Réservoir thermique selon la revendication 1 ou 2, dans lequel au moins un des points d'attache (5) de l'au moins un élément de retenue (2; 3; 4) est constitué, notamment façonné, sur l'au moins un élément de retenue (2; 3; 4).

4. Réservoir thermique selon l'une des revendications précédentes, dans lequel au moins un des points d'attache (5) de l'au moins un élément de retenue (2; 3; 4) comprend ou est constitué d'un trou (6) présent dans le matériau de type bois et permettant d'y attacher le tuyau (50), notamment directement et/ou indirectement ou par le biais d'un élément de fixation.

5. Réservoir thermique selon la revendication 4, dans lequel le matériau de type bois est séché et ne dépasse pas une teneur en humidité prédéterminée, et dans lequel le trou (6) a une lumière (w), laquelle lumière (w) est dimensionnée pour accueillir le tuyau (50) ou l'élément de fixation du tuyau (50) dans le trou (6), notamment avec un certain jeu, et pour exercer sur le tuyau (50) une force de serrage concomitante à un gonflement du matériau de type bois.

6. Réservoir thermique selon la revendication 4 ou 5, dans lequel le trou (6) est un trou traversant (6.1) et le trou traversant (6.1) présente un passage (7), s'étendant tangentiellement par rapport à l'axe spatial (y), à travers l'au moins un élément de retenue (2; 3; 4), lui permettant de recevoir le tuyau (50).

7. Réservoir thermique selon la revendication 6, dans lequel le trou traversant (6.1) présente une ouverture d'insertion (8), sur un côté tourné vers l'extérieur ou vers l'intérieur par rapport à l'axe spatial (y), permettant d'introduire le tuyau (50) longitudinalement dans le trou traversant (6.1) selon un mouvement dirigé dans le sens radial par rapport à l'axe spatial (y).

8. Réservoir thermique selon la revendication 7, dans lequel un élément de blocage (9) qui obture au moins partiellement l'ouverture d'insertion (8) est associé à l'au moins un élément de retenue (2; 3; 4) pour empêcher le tuyau (50) de sortir de l'ouverture d'insertion (8).

9. Réservoir thermique selon la revendication 8, dans lequel un logement d'encastrement (10) est façonné sur l'au moins un élément de retenue (2; 3; 4) et l'élément de blocage (9) est inséré dans ledit logement d'encastrement en couvrant l'ouverture d'insertion (8).

10. Réservoir thermique selon l'une des revendications 4 à 6, dans lequel l'au moins un élément de retenue (2'; 3'; 4') est formé en deux pièces et comprend deux pièces individuelles (13, 14) conçues pour être raccordées l'une à l'autre, une section circonférentielle du trou (6) étant façonnée sur chacune des pièces individuelles (13, 14).

11. Réservoir thermique selon l'une des revendications précédentes, comprenant une surface de montage (15) destinée à être placée sur une surface sous-jacente, ladite surface de montage (15) étant associée à une extrémité longitudinale (16) des éléments de retenue (2, 3, 4).

12. Réservoir thermique selon l'une des revendications précédentes, dans lequel le tuyau (50) comprend ou est constitué d'un tuyau ondulé.
